# EUROPÄISCHE PATENTSCHRIFT

(11) **EP 2 674 287 B1**
(45) Veröffentlichungstag und Bekanntmachung des Hinweises auf die Patenterteilung: **16.03.2016**
(21) Anmeldenummer: 13168834.3
(22) Anmeldetag: 23.05.2013
(51) Int. Cl.: B29D 30/06, B29D 30/00, B29B 13/08

(54) **VERFAHREN ZUM AUFBRINGEN EINER SELBSTDICHTENDEN PANNENSCHUTZSCHICHT AUF DER REIFENINNENSEITE EINES FAHRZEUGLUFTREIFENS**
METHOD FOR APPLYING A SELF-SEALING PUNCTURE PROTECTION LAYER ON THE INTERNAL SIDE OF A PNEUMATIC VEHICLE TYRE
PROCÉDÉ D'APPLICATION D'UNE COUCHE DE PROTECTION ANTI-CREVAISON AUTO-ÉTANCHE SUR L'INTÉRIEUR D'UN PNEUMATIQUE DE VÉHICULE

(30) Priorität: 11.06.2012 DE 102012105015
(43) Veröffentlichungstag der Anmeldung: 18.12.2013
(73) Patentinhaber: Continental Reifen Deutschland GmbH, 30165 Hannover (DE)
(72) Erfinder: Fei, Liu, 30173 Hannover (DE); Tyburski, Andreas, 31241 Ilsede (DE); Dietrich, Holger, 30938 Burgwedel (DE); Kurz, Martin, 30161 Hannover (DE)
(74) Vertreter: Widjaja, Wira

(56) Entgegenhaltungen:
- EP-A1- 1 604 809
- WO-A1-2009/070146
- WO-A2-2010/106185
- JP-A- 2001 018 609
- KR-A- 20060 028 088
- US-A- 4 443 279

## Beschreibung

Die Erfindung betrifft ein Verfahren zum Aufbringen einer selbstdichtenden Pannenschutzschicht auf der Reifeninnenseite eines Fahrzeugluftreifens.

Es ist bekannt, Fahrzeugluftreifen auf der Innenseite mit einer selbstdichtenden Pannenschutzschicht zu versehen. Die Pannenschutzschicht wird nach der Reifenvulkanisation auf der Reifeninnenseite aufgebracht. Ein wesentliches Problem beim Aufbringen der Pannenschutzschicht besteht darin, dass die Oberfläche der Reifeninnenseite insbesondere von Schmiermittelrückständen gereinigt werden muss, die bei der Reifenwlkanisation auf die Reifeninnenseite gelangen. Ohne eine solche Reinigung würde die Haftung der Pannenschutzschicht an der Reifeninnenseite stark beeinträchtigt werden. Es gibt unterschiedliche Ansätze, die Reifeninnenseite von den Schmiermittelrückständen zu reinigen, die alle entsprechende Nachteile aufweisen.
Die JP 2001 0108609 A und US 4 443 279 A offenbaren bekannte Reifenkostruktionen mit einer Pannenschutzschicht. Die EP 1604809A1 offenbart ein Verfahren zur Behandlung einer Reifeninnenseite.

Der Erfindung liegt die Aufgabe zu Grunde, ein Verfahren bereit zu stellen, mit dem die Reifeninnenseite des Fahrzeugreifens vor dem Aufbringen einer selbstdichtenden Pannenschutzschicht auf einfache Weise gereinigt werden kann.

Gelöst wird die Aufgabe gemäß Anspruch 1.

Ein Vorteil des erfindungsgemäßen Verfahrens besteht darin, dass die Reifeninnenseite auf einfache Weise und mit einer hohen Effektivität gereinigt wird. Die an der Reifeninnenseite anhaftenden Schmiermittelrückstände werden durch das Verfahren komplett von der Reifeninnenseite mit einer hohen Prozeßgeschwindigkeit entfernt. Die Pannenschutzschicht wird nach der Reinigung der Reifeninnenseite in den Fahrzeugreifen angebracht, wobei eine optimale Haftung zwischen der Pannenschutzschicht und der Reifeninnenseite erzielt wird.

Es ist vorgesehen, dass bei Schritt c) der Laser-Strahl eine auf die Reifeninnenseite gerichtete lininenförmige Projektion aufweist,
wobei mit dem linienförmigen Laser-Strahl die Reifeninnenseite im Wesentlichen zwischen den Reifenschultern bestrahlt wird.
Durch die linienförmige Projektion des Laser-Strahls auf die Reifeninnenseite läßt sich das Verfahren mit einer höhen Prozessgeschwindigkeit durchführen. Außerdem wird die Reinigung nur in dem Bereich der Reifeninnenseite zwischen beiden Reifenschultern durchgeführt, wo in einem nachfolgenden Schritt die Pannenschutzschicht aufgetragen wird.

In einer weiteren vorteilhaften Weiterbildung der Erfindung ist vorgesehen, dass der Reifen bei Schritt c) mit einer Vorrichtung um seine eigene Achse rotiert wird, wohingegen die Haltevorrichtung für die Laser-Optik seine Position beibehält. Das Rotieren des Fahrzeugreifens lässt sich einfacher und mit einer relativ hohen Geschwindigkeit umsetzen.

In einer weiteren vorteilhaften Weiterbildung der Erfindung ist vorgesehen, dass der linienförmige Laser-Strahl auf der Reifeninnenseite im Wesentlichen parallel zur Mittelachse des Reifens ausgerichtet ist.
Dadurch wird eine effektive Reinigung der Reifeninnenseite erzielt.

In einer weiteren vorteilhaften Weiterbildung der Erfindung ist vorgesehen, dass zumindestens bei Schritt c) der Abstand zwischen der Laser-Optik und der Reifeninnenseite mit einem Abstandssensor überwacht wird,
wodurch die Fokusierung des Laser-Strahles anpassbar ist.
Auf diese Weise wird gewährleistet, dass immer eine optimale Energiedichte auf die Reifeninnenseite aufgebracht wird, die den Reinigungsprozess insgesamt verbessert.

In einer weiteren vorteilhaften Weiterbildung der Erfindung ist vorgesehen, dass die Haltevorrichtung für die Laser-Optik einen Robotor-Arm umfasst,
der die Laser-Optik automatisch in eine beliebige Position ausrichtet.
Mit dem Roboter-Arm lässt sich die Laser-Optik mit einer hohen Prozessgeschwindigkeit an der entsprechenden Stelle innerhalb des Reifens positionieren.

In einer weiteren vorteilhaften Weiterbildung der Erfindung ist vorgesehen, dass das Laser-Licht über einen oder eine Vielzahl von flexiblen Lichleitern zur Laser-Optik geführt wird. Die Lichtleiter gewährleisten eine effektive und verlustarme Übertragung des LaserLichtes zur Laser-Optik.

In einer weiteren vorteilhaften Weiterbildung der Erfindung ist vorgesehen, dass der Reifen bei Schritt c) zumindestens zweimal um seine eigene Achse gedreht wird, wobei der Laser-Strahl mindestens zweimal die Reifeninnenseite von Schmiermittelrückständen reinigt.
Versuche haben ergeben, dass bei einem konstanten Energieeintrag bessere Reinigungsergebnisse erzielt werden, wenn der Laser-Strahl zweimal über die Oberfläche verfahren wird.

In einer weiteren vorteilhaften Weiterbildung der Erfindung ist vorgesehen, dass die Wellenlänge des Laser-Strahl zwischen 0,1 und 3 Mikrometer, vorzugsweise ca. 1,06 Mikrometer, beträgt.
Bei dieser Wellenlänge werden optimale Reinigungsergebnisse erzielt.

In einer weiteren vorteilhaften Weiterbildung der Erfindung ist vorgesehen, dass bei Schritt e) das Aufbringen der selbstdichtenden Pannenschutzschicht mit einer Düse erfolgt, wobei ein gleichmäßig dicker Strang mit der Panneschutzschicht spiralförmig auf die gereinigte Reifeninnenseite aufgebracht wird.

Dadurch wird die Pannenschutzschicht effektiv und gleichmäßig auf die Reifeninnenseite aufgebracht.

Anhand eines Ausführungsbeispieles soll die Erfindung näher erläutert werden.

Es zeigt:

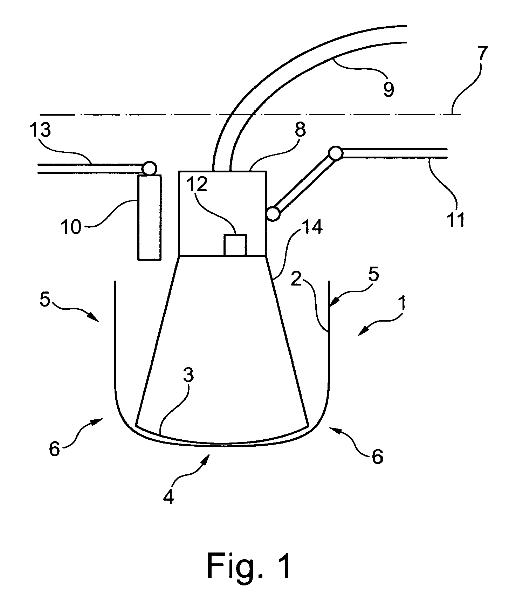

- Fig. 1 :: ein Ausführungsbeispiel des erfindungsgemäßen Verfahrens.

Die Fig. 1 zeigt ein Ausführungsbeispiel des Verfahrens.

Der Fahrzeugluftreifen 1 ist schematisch in einer Radialschnittansicht dargestellt. Er weist eine linke und eine rechte Seitenwand 5, an der Außenseite einen Laufstreifen 4 und eine Reifeninnenseite 2 auf. Die Mittelachse des Fahrzeugreifens 1 ist mit der Strich-Punkt-Linie 7 schematisch dargestellt. Auf der Reifeninnenseite befinden sich Schmiermittelrückstände bzw. Trennmittel 3, die von der Reifenvulkanisation herstammen. Ein wesentliches Ziel des Verfahrens besteht darin, diese Schmiermittelrückstände 3 vollständig von der Reifeninnenseite zu entfernen. In einem ersten Verfahrensschritt wird der fertig vulkanisierte Fahrzeugreifen in einer Reinigungsvorrichtung positioniert. Anschließend wird die Laser-Optik 8 mit dem Roboter-Arm 11 über dem Reifenhohlraum des Fahrzeugreifens 1 wie in der Fig.1 dargestellt positioniert. Das Laser-Licht wird über den Lichtleiter 9 zur Laser-Optik 8 geführt, der den dargestellten Laser-Strahl 14 erzeugt. Der in der Aufsicht linienförmige Laser-Strahl wird auf die Reifeninnenseite projiziert und fokusiert. Der Laser-Strahl durchdringt die Schmiermittelrückstände 3 zumindest teilweise und löst die festen Schmiermittelrückstände 3 insbesondere durch eine thermische Wirkung von der Reifeninnenseite 2 ab. Die Schmiermittelrückstände 3 werden dabei in einen pulverförmigen Zustand überführt, wobei dieses abgetrennte Pulver bzw. staubförmiges Material mit der Saugvorrichtung 10 aus dem Reifenhohlraum abgesaugt wird. Der linienförmige Laser-Strahl 2 überdeckt die Reifeninnenseite im Bereich zwischen den beiden Reifenschultern 6. Nur in diesem Bereich der Reifeninnenseite wird nachfolgend eine entsprechende Pannenschutzschicht aufgetragen, die in der Fig. 1 nicht dargestellt ist. An der Laser-Optik ist ein Abstandsensor 12 angeordnet, der die Entfernung der Laser-Optik zur Oberfläche der Reifeninnenseite kontinuierlich überwacht. Aufgrund von Unregelmäßigkeiten in der Oberfläche oder durch Unwuchterscheinung des Fahrzeugreifens kann der Abstand zur Reifeninnenseite variieren und muss aufgrund einer optimalen Fokusierung ggf. nachgeregelt werden. Nach dem Reinigen der Reifeninnenseite 2 wird in einem nachfolgenden Schritt die Pannenschutzschicht in einem viskosen Zustand mit einer Düse spiralförmig auf der Reifeninnenseite aufgebracht. Bei einer Beschädigung des Fahrzeugreifens im Bereich des Laufstreifens 4, beispielsweise infolge des Eindringens eines spitzen Gegenstandes, wird die beschädigte Stelle durch die selbstdichtende Pannenschutzschicht wieder luftdicht verschlossen, so dass kein Druckverlust mehr auftritt.

### Bezugszeichenliste

### (ist Teil der Beschreibung)

- 1: Fahrzeugreifen
- 2: Reifeninnenseite
- 3: Schmiermittel- bzw.Trennmittelrückstände auf der Reifeninnenseite
- 4: Laufstreifen mit Reifenprofil
- 5: Seitenwand
- 6: Reifenschulter
- 7: Mittelachse des Fahrzeugreifens
- 8: Laser-Optik
- 9: Lichtleiter
- 10: Saugvorrichtung
- 11: Robotorarm für Laser-Optik
- 12: Abstandsensor
- 13: Haltevorrichtung für Saugvorrichtung
- 14: Laser-Strahl

## Patentansprüche

1. Verfahren zum Aufbringen einer selbstdichtenden Pannenschutzschicht auf der Reifeninnenseite (2) eines Fahrzeugluftreifens (1) mit folgenden Schritten,
a) Anordnen eines fertig vulkanisierten Reifens (1) in einer Reinigungsvorrichtung, wobei infolge der Vulkanisation Schmiermittelrückstände (3) auf der Reifeninnenseite (2) anhaften,
b) Anordnen einer Laser-Optik (8) mit einer Haltevorrichtung (11) in der Reinigungsvorrichtung,
wobei der Laser-Strahl (14) der Laser-Optik (8) auf die Reifeninnenseite (2) ausrichtbar ist,
c) Aktivierung des Laser-Strahles (14),
wobei der auf die Reifeninnenseite (2) gerichtete Laser-Strahl (14) zumindest teilweise die Schmiermittelrückstände durchdringt und über die Energie-Bestrahlung sowie eine thermische Erwärmung der Oberfläche die anhaftenden Schmiermittelrückstände (3) von der der Oberfläche der Reifeninnenseite (2) ablöst,
wobei die Schmiermittelrückstände (3) bei der Ablösung von der Reifeninnenseite (2) gleichzeitig in einen pulverförmigen Zustand überführt werden,
wobei der Laser-Strahl (14) eine auf die Reifeninnenseite (2) gerichtete linienförmige Projektion aufweist,
wobei mit dem linienförmigen Laser-Strahl (14) die Reifeninnenseite (2) im Wesentlichen zwischen den Reifenschultern (6) bestrahlt wird
d) Absaugen der pulverförmige Schmiermittelrückstände mit einer Saugvorrichtung (10),
e) Aufbringen einer selbstdichtenden Pannenschutzschicht auf der von Schmiermittelrückständen gereinigten Reifeninnenseite (2) des Fahrzeugluftreifens (1).

2. Verfahren nach Anspruch 1,
**dadurch gekennzeichnet, dass**
der Reifen bei Schritt c) mit einer Vorrichtung um seine eigene Achse (7) rotiert wird, wohingegen die Haltevorrichtung (11) für die Laser-Optik (8) seine Position beibehält.

3. Verfahren nach einem der vorhergehenden Ansprüche,
**dadurch gekennzeichnet, dass**
der linienförmige Laser-Strahl (14) auf der Reifeninnenseite (2) im Wesentlichen parallel zur Mittelachse (7) des Reifens (1) ausgerichtet ist.

4. Verfahren nach einem der vorhergehenden Ansprüche,
**dadurch gekennzeichnet, dass**
das zumindest bei Schritt c) der Abstand zwischen der Laser-Optik und der Reifeninnenseite mit einem Abstandssensor (12) überwacht wird,
wodurch die Fokusierung des Laser-Strahles (14) anpassbar ist.

5. Verfahren nach einem der vorhergehenden Ansprüche,
**dadurch gekennzeichnet, dass**
die Haltevorrichtung für die Laser-Optik (8) einen Roboter-Arm (11) umfasst, der die Laser-Optik (8) automatisch in eine beliebige Position ausrichtet.

6. Verfahren nach einem der vorhergehenden Ansprüche,
**dadurch gekennzeichnet, dass**
das Laser-Licht (8) über einen oder eine Vielzahl von flexiblen Lichtleitern (9) zur Laser-Optik (8) geführt wird.

7. Verfahren nach einem der vorhergehenden Ansprüche,
**dadurch gekennzeichnet, dass**
der Reifen bei Schritt c) zumindest zweimal um seine eigene Achse (7) gedreht wird,
wobei der Laser-Strahl (8) mindestens zweimal die Reifeninnenseite (2) von Schmiermittelrückständen (3) reinigt.

8. Verfahren nach einem der vorhergehenden Ansprüche,
**dadurch gekennzeichnet, dass**
die Wellenlänge des Laser-Strahl (14) zwischen 0,1 und 3 Mikrometer, vorzugsweise ca. 1,06 Mikrometer, beträgt.

9. Verfahren nach einem der vorhergehenden Ansprüche,
**dadurch gekennzeichnet, dass**
bei Schritt e) das Aufbringen der selbstdichtenden Pannenschutzschicht mit einer Düse erfolgt,
wobei ein gleichmäßig dicker Strang mit der Pannenschutzschicht spiralförmig auf die gereinigte Reifeninnenseite (2) aufgebracht wird.

## Claims

1. Method for applying a self-sealing puncture protection layer on the tyre inner side (2) of a pneumatic vehicle tyre (1) with the following steps,
a) arranging a finished vulcanized tyre (1) in a cleaning device, lubricant residues (3) adhering to the tyre inner side (2) as a result of the vulcanization,
b) arranging a laser optics (8) with a holding device (11) in the cleaning device,
wherein the laser beam (14) of the laser optics (8) can be aligned with the tyre inner side (2),
c) activating the laser beam (14),
wherein the laser beam (14) directed onto the tyre inner side (2) penetrates at least partially through the lubricant residues and detaches the adhering lubricant residues (3) from the surface of the tyre inner side (2) by way of the irradiation with energy and a thermal warming of the surface, wherein the lubricant residues (3) are transformed into a powdery state at the same time as they are detached from the tyre inner side (2),
wherein the laser beam (14) has a linear projection directed onto the tyre inner side (2),
wherein the tyre inner side (2) is irradiated with the linear laser beam (14) substantially between the tyre shoulders (6),
d) extracting the powdered lubricant residues with a suction device (10),
e) applying a self-sealing puncture protection layer on the tyre inner side (2) of the pneumatic vehicle tyre (1) cleaned of lubricant residues.

2. Method according to Claim 1,
**characterized in that**
in step c), the tyre is rotated about its own axis (7) by a device, whereas the holding device (11) for the laser optics (8) maintains its position.

3. Method according to one of the preceding claims,
**characterized in that**
the linear laser beam (14) on the tyre inner side (2) is aligned substantially parallel to the centre axis (7) of the tyre (1).

4. Method according to one of the preceding claims,
**characterized in that**
at least in step c), the distance between the laser optics and the tyre inner side is monitored by a distance sensor (12), whereby the focusing of the laser beam (14) is adaptable.

5. Method according to one of the preceding claims,
**characterized in that**
the holding device for the laser optics (8) comprises a robot arm (11), which automatically aligns the laser optics (8) in a desired position.

6. Method according to one of the preceding claims,
**characterized in that**
the laser light (8) is guided to the laser optics (8) by way of a flexible light guide (9) or multiple flexible light guides (9).

7. Method according to one of the preceding claims,
**characterized in that**
in step c), the tyre is rotated at least twice about its own axis (7),
wherein the laser, beam (8) cleans the tyre inner side (2) of lubricant residues (3) at least twice.

8. Method according to one of the preceding claims,
**characterized in that**
the wavelength of the laser beam (14) is between 0.1 and 3 micrometres, preferably about 1.06 micrometres.

9. Method according to one of the preceding claims,
**characterized in that**
in step e), the application of the self-sealing puncture protection layer is performed with a nozzle,
wherein a uniformly thick strand with the puncture protection layer is applied spirally onto the cleaned tyre inner side (2).

## Revendications

1. Procédé d'application d'une couche de protection anti-crevaison auto-obturante sur la face interne de pneumatique (2) d'un pneumatique de véhicule (1) comportant les étapes consistant à :
a) disposer un pneumatique entièrement vulcanisé (1) dans un dispositif de nettoyage, dans lequel des résidus de lubrifiant (3) consécutifs à la vulcanisation adhèrent à la face interne de pneumatique (2),
b) disposer une optique laser (8) comportant un dispositif de maintien (11) dans le dispositif de nettoyage,
dans lequel le faisceau laser (14) de l'optique laser (8) peut être dirigé vers la face interne de pneumatique (2),
c) activer le faisceau laser (14),
dans lequel le faisceau laser (14) dirigé vers la face interne de pneumatique (2) passe au moins partiellement à travers les résidus de lubrifiant et les résidus de lubrifiant (3) qui adhèrent se détachent de la surface de la face interne de pneumatique (2) du fait de l'exposition à de l'énergie et d'un échauffement thermique de la surface,
dans lequel les résidus de lubrifiant (3) sont amenés à passer dans un état pulvérulent en même temps qu'ils se détachent de la face interne de pneumatique (2),
dans lequel le faisceau laser (14) présente une projection de forme linéaire dirigée vers la face interne de pneumatique (2),
dans lequel la face interne de pneumatique (2) est essentiellement exposée au faisceau laser de forme linéaire (14) entre les épaulements de pneumatique (6),
d) aspirer les résidus de lubrifiant pulvérulent à l'aide d'un dispositif d'aspiration (10),
e) appliquer une couche anti-crevaison auto-obturante sur la face interne de pneumatique (2) débarrassée des résidus de lubrifiant du pneumatique de véhicule (1).

2. Procédé selon la revendication 1,
**caractérisé en ce que** le pneumatique, lors de l'étape c), est mis en rotation au moyen d'un dispositif autour de son axe propre (7), tandis que le dispositif de maintien (11) reste à sa position pour l'optique laser (8).

3. Procédé selon l'une quelconque des revendications précédentes,
**caractérisé en ce que** le faisceau laser de forme linéaire (14) est dirigé vers la face interne de pneumatique (2) de manière sensiblement parallèle à l'axe central (7) du pneumatique (1).

4. Procédé selon l'une quelconque des revendications précédentes,
**caractérisé en ce que** la distance entre l'optique laser et la face interne de pneumatique, du moins lors de l'étape c), est surveillée au moyen d'un capteur de distance (12), de manière à ce que la focalisation du faisceau laser (14) puisse être adaptée.

5. Procédé selon l'une quelconque des revendications précédentes,
**caractérisé en ce que** le dispositif de maintien de l'optique laser (8) comprend un bras robotisé (11) qui dirige automatiquement l'optique laser (8) vers une position quelconque.

6. Procédé selon l'une quelconque des revendications précédentes,
**caractérisé en ce que** la lumière laser (8) est guidée par l'intermédiaire d'une pluralité de guides optiques flexibles (9) vers l'optique laser (8).

7. Procédé selon l'une quelconque des revendications précédentes,
**caractérisé en ce que** le pneumatique, lors de l'étape c), est mis en rotation au moins deux fois autour de son axe propre (7),
dans lequel le faisceau laser (8) nettoie au moins deux fois la face interne de pneumatique (2) pour la débarrasser des résidus de lubrifiants (3).

8. Procédé selon l'une quelconque des revendications précédentes,
**caractérisé en ce que** la longueur d'onde du faisceau laser (14) se situe entre 0,1 et 3 micromètres, et de préférence à environ 1,06 micromètres.

9. Procédé selon l'une quelconque des revendications précédentes,
**caractérisé en ce que**, lors de l'étape e), l'application de la couche anti-crevaison auto-obturante est effectuée à l'aide d'une buse,
dans lequel une corde ayant une épaisseur sensiblement uniforme dotée de la couche anti-crevaison est appliquée en spirale sur la face interne de pneumatique (2) nettoyée.
